# EUROPÄISCHE PATENTANMELDUNG

(11) **EP 3 866 315 A1**
(43) Veröffentlichungstag der Anmeldung: **18.08.2021**
(21) Anmeldenummer: 20156982.9
(22) Anmeldetag: 12.02.2020
(51) Int. Cl.: H02K 15/00, B22D 19/00

(54) **VERFAHREN UND GIESSFORM ZUR HERSTELLUNG EINES LÄUFERS**

(71) Anmelder: Breuckmann eMobility GmbH, 42579 Heiligenhaus (DE)
(72) Erfinder: BREUCKMANN, Volker, 42579 Heiligenhaus (DE); BREUCKMANN, Michael, 42579 Heiligenhaus (DE)
(74) Vertreter: advotec.

(57) **Zusammenfassung**

Die Erfindung betrifft ein Verfahren und eine Gießform zur Herstellung eines Läufers (10) für eine Elektromaschine, wobei der Läufer aus einem Metallkern (25), zumindest einem unteren Kurzschlussring (20), einem oberen Kurzschlussring (21), und lamellenförmigen Leitern (17), die die Kurzschlussringe verbinden, ausgebildet wird, wobei das Verfahren mit einer Gießmaschine und einer Gießform (22) durchgeführt wird, wobei ein geschmolzenes Metall in der Gießform am Metallkern angebracht wird, wobei das Metall Kupfer, Aluminium oder Silber ist, wobei der Läufer mit seiner Rotationsachse (13) vertikal relativ zu einer Horizontalebene der Gießform ausgebildet wird, wobei das Metall an einem Anschnitt (27) der Gießform an dem unteren Kurzschlussring in die Gießform eingebracht wird und den unteren Kurzschlussring, die Leiter und den oberen Kurzschlussring ausfüllt, wobei der Anschnitt eine Querschnittsfläche A_{A} ausbildet, wobei eine Summe der Leiter eine Querschnittsfläche A_{∑L} ausbildet, wobei der Anschnitt mit einem Verhältnis A_{A} ≥ 0,5^{∗}A_{∑L}, bevorzugt A_{A} ≥ A_{∑L}, verwendet wird.

## Beschreibung

Die Erfindung betrifft ein Verfahren und eine Gießform zur Herstellung eines Läufers für eine Elektromaschine, insbesondere Elektromotor, Drehstrommotor, Generator oder dergleichen, wobei der Läufer aus einem Metallkern, zumindest einem unteren Kurzschlussring und einem oberen Kurzschlussring, und lamellenförmigen Leitern, die die Kurzschlussringe verbinden, ausgebildet wird, wobei das Verfahren mit einer Gießmaschine und einer Gießform durchgeführt wird, wobei der Metallkern in der Gießform angeordnet und ein Metall in der Gießform am Metallkern angebracht wird, wobei das Metall geschmolzen und in die Gießform eingebracht wird, wobei das Metall Kupfer, Aluminium, Silber oder eine Legierung eines dieser Metalle ist, wobei der Läufer mit seiner Rotationsachse vertikal relativ zu einer horizontalen Ebene in der Gießform ausgebildet wird, wobei das Metall an einem Anschnitt der Gießform an dem unteren Kurzschlussring in die Gießform eingebracht wird.

Bei der Herstellung von derartigen Läufern, die regelmäßig auch als Rotor bezeichnet werden und prinzipiell auch als Stator eingesetzt werden können, wird ein aus einem Stapel von Eisenblechen gebildeter Eisenkern bzw. Metallkern des Läufers ausgegossen, so dass an einem äußeren Umfang des Läufers bzw. des Metallkerns ein elektrisch kurzgeschlossener Leiterkäfig aus Kupfer oder Aluminium ausgebildet wird. Das Ausgießen des Metallkerns erfolgt regelmäßig in einem Druckgussverfahren, wobei das gegossene Metall eine vergleichsweise hohe Porosität aufweist. Dies ist nachteilig, da die Porosität insbesondere die physikalischen und elektrischen Eigenschaften des gegossenen Leiterkäfigs gegenüber theoretisch möglichen Eigenschaften des Kupfers oder Aluminiums bei nicht Vorliegen von Porosität mindert. Poren verringern einen elektrisch und auch mechanisch wirksamen Querschnitt der jeweiligen Leiter. Durch eine geringere Porosität kann somit ein höherer Wirkungsgrad des Läufers bzw. der Elektromaschine erzielt werden. Weiter ermöglicht ein mechanisch stabiler Leiterkäfig eine höhere Rotationsgeschwindigkeit des Läufers und damit einen verbesserten Wirkungsgrad eines beispielsweise Drehstrommotors. Darüber hinaus kann eine Poren- oder Lunkerbildung zu einem erhöhten Aufwand beim Auswuchten des Läufers führen.

Bei einem aus der EP 3 113 337 A1 bekannten Gießverfahren zum Gießen von Läufern bzw. Rotoren ist an einem oberen und an einem unteren Kurzschlussring jeweils ein Anschnitt vorgesehen, über die gleichzeitig flüssiges Metall in die Gießform eingebracht wird. Dadurch soll eine Füllung der Gießform mit niedrigerer Strömungsgeschwindigkeit erzielt werden, wodurch die Füllung weniger turbulent verläuft, was eine Porenbildung mindern soll. Die Anordnung des zweiten Anschnitts am oberen Kurzschlussring hat jedoch die Ausbildung zweier aufeinander sich zu bewegende Schmelzefronten zur Folge, wodurch eine Kavität der Gießform ungleichmäßig gefüllt und eine Entlüftung der Gießform erschwert wird.

Auch die DE 10 2013 208 151 A1 betrifft ein Gießverfahren zum Gießen von Kupferrotoren, bei denen das geschmolzene Metall mit einer vergleichsweise geringen Strömungsgeschwindigkeit an einem Anschnitt der Gießform in diese eingebracht wird. Hierdurch soll ein ruhigeres, turbulenzarmes Füllen der Gießform und damit eine geringere Porosität erzielt werden.

Es ist daher Aufgabe der Erfindung, ein Verfahren und eine Gießform zur Herstellung eines Läufers vorzuschlagen, welches bzw. welche eine Porosität eines Leiterkäfigs weiter reduziert.

Diese Aufgabe wird durch ein Verfahren mit den Merkmalen des Anspruchs 1 und eine Gießform mit den Merkmalen des Anspruchs 13 gelöst.

Bei dem erfindungsgemäßen Verfahren zur Herstellung eines Läufers für eine Elektromaschine, insbesondere Drehstrommotor, Generator oder dergleichen, wird der Läufer aus einem Metallkern, zumindest einem unteren Kurzschlussring und einem oberen Kurzschlussring, und lamellenförmigen Leitern, die die Kurzschlussringe verbinden, ausgebildet, wobei das Verfahren mit einer Gießmaschine und einer Gießform durchgeführt wird, wobei der Metallkern in der Gießform angeordnet und ein Metall in der Gießform am Metallkern angebracht wird, wobei das Metall geschmolzen und in die Gießform eingebracht wird, wobei das Metall Kupfer, Aluminium, Silber oder eine Legierung eines dieser Metalle ist, wobei der Läufer mit seiner Rotationsachse vertikal relativ zu einer Horizontalebene in der Gießform ausgebildet wird, wobei das Metall an einem Anschnitt der Gießform an dem unteren Kurzschlussring in die Gießform eingebracht wird, wobei das Metall ausgehend von dem Anschnitt den unteren Kurzschlussring, die Leiter und den oberen Kurzschlussring ausfüllt, wobei der Anschnitt eine Querschnittsfläche A_{A} ausbildet, wobei eine Summe der Leiter eine Querschnittsfläche A_{ΣL} ausbildet, wobei der Anschnitt mit einem Verhältnis A_{A} ≥ 0,5^{∗}A_{ΣL}, bevorzugt A_{A} ≥ A_{ΣL}, verwendet wird.

Bei der Erfindung kann eine schnelle Füllung des oberen Kurzschlussrings insbesondere dadurch ermöglicht werden, dass das Verhältnis zwischen Querschnittsfläche A_{A} und Querschnitts A_{ΣL} so gewählt ist, dass bei der Füllung der Anschnitt keinen wesentlichen hydraulischen Widerstand für das in eine Kavität der Gießform einströmende Metall darstellt. Nach dem Stand der Technik wird der Querschnitt des Anschnitts einer Gießform über ein Gussteilvolumen und eine mittlere oder minimale Wandstärke des Gussteils definiert. Da die Leiter bzw. Nuten vergleichsweise dünn sind, werden diese, insbesondere bei besonders langen Läufern, schnell gefüllt, wobei das Metall schnell erstarrt. Gemäß der Erfindung ist es daher vorgesehen, die Querschnittsfläche A_{A} des Anschnitts in Abhängigkeit der Querschnittsfläche A_{ΣL} der Leiter auszubilden. Eine Füllung des unteren Kurzschlussrings behindert dann nicht eine Füllung des oberen Kurzschlussrings über die Leiter bzw. Nuten, wodurch eine Porosität im Metall des oberen Kurzschlussrings gemindert werden kann.

Der Anschnitt kann mit dem Verhältnis A_{A} ≤ 7^{∗}A_{ΣL}, bevorzugt zwischen A_{A} ≥ 2^{∗}A_{ΣL} bis A_{A} ≤ 3^{∗}A_{ΣL}, verwendet werden. Der Anschnitt kann folglich auch so groß ausgebildet sein, dass der Querschnitt A_{A} des Anschnitts auch größer ist als ein Querschnitt des unteren Kurzschlussrings relativ bezogen auf die Rotationsachse. Besonders vorteilhaft ist es jedoch, wenn der Querschnitt A_{A} größer als die Summe der Querschnitte der Nuten ist. Gleichwohl sollte der Querschnitt A_{A} nicht so groß sein, dass ein Anguss von einem Halbfertigteil des Läufers nur mit großem Aufwand, beispielsweise durch Sägen, abgetrennt werden muss.

Das Metall kann ausgehend von dem Anschnitt den unteren Kurzschlussring, die Leiter und den oberen Kurzschlussring ausfüllen, wobei das Metall über den oberen Kurzschlussring in zumindest eine variable Kammer der Gießform an dem oberen Kurzschlussring eingebracht werden kann, wobei mittels eines an die Kammer angeschlossenen Stößels der Gießform das in der Kammer befindliche Metall mit einem Druck beaufschlagt und zumindest teilweise, beispielsweise zum Ausgleich von Schwindungen, in den oberen Kurzschlussring verdrängt werden kann.

Abweichend von dem aus dem Stand der Technik bekannten Gießverfahren für Läufer mit einem Metallkern kann demnach vorgesehen sein, das geschmolzene Metall über alleine einen Anschnitt in die Gießform einzubringen. Der eine Anschnitt ist an dem unteren Kurzschlussring angebracht, der bei einem vertikal angeordneten Läufer bzw. bei der derart positionierten Gießform unterhalb des oberen Kurzschlussrings liegt. Die Kurzschlussringe können im Wesentlichen übereinstimmend ausgebildet sein. Beim Einbringen von dem geschmolzenen Metall in eine Kavität der Gießform über den Anschnitt am unteren Kurzschlussring bzw. ersten Kurzschlussring strömt dieses zunächst in den unteren Kurzschlussring und von dort aus in Nuten des Metallkerns, die ausgegossen die Leiter des gegossenen Läufers, bzw. Rotors oder auch Stators ausbilden. Ein Querschnitt der Nuten ist konstruktiv vorgegeben, so dass eine Strömungsgeschwindigkeit des geschmolzenen Metalls über den Anschnitt wenig beeinflussbar ist. Beispielsweise können die Nuten an den dicksten Stellen nur 0,5 mm bis 3,5 mm dick sein. Das die Nuten durchströmende Metall gelangt nachfolgend in den oberen Kurzschlussring bzw. zweiten Kurzschlussring und füllt diesen aus, wobei die Füllung abgeschlossen sein muss, bevor das Metall in den Nuten erstarrt. Eine Strömungsgeschwindigkeit am Anschnitt muss daher so hoch gewählt sein, dass noch eine vollständige Füllung des oberen Kurzschlussrings vor dem Erstarren des Metalls in den Nuten erfolgen kann, was jedoch aufgrund der dann turbulenten Füllung der Kavität der Gießform zu einer erhöhten Porosität führt.

Weiter kann vorgesehen sein, dass das Metall über den oberen Kurzschlussring hinaus noch in zumindest eine variable Kammer der Gießform, welche an dem oberen Kurzschlussring bzw. einer entsprechenden Kavität angeordnet ist, eingebracht wird. Dabei kann mittels eines an die Kammer angeschlossenen Stößels der Gießform das in der Kammer befindliche Metall mit einem Druck beaufschlagt und zumindest teilweise, zum Ausgleich von Schwindungen, in den oberen Kurzschlussring verdrängt werden. So ist es möglich, ein Schwinden des Metalls beim Erstarren im oberen Kurzschlussring dadurch auszugleichen, dass noch flüssiges Metall aus der Kammer zurück in den oberen Kurzschlussring gefördert wird. Der an die Kammer angeschlossene Stößel wird dazu in die Kammer hinein bewegt, um das in der Kammer befindliche Metall zu verdrängen und den Druck auszubilden. Da die Füllung des oberen Kurzschlussrings mit flüssigem Metall vergleichsweise turbulent erfolgt, können sich in diesem Bereich Lunker bzw. Poren bilden und eine erhöhte Porosität entstehen. Dies kann wirksam durch die Beaufschlagung des flüssigen Metalls mit dem Druck und die zumindest teilweise Verdrängung zurück in den oberen Kurzschlussring verhindert werden, so dass der obere Kurzschlussring ebenfalls mit geringerer Porosität ausgebildet werden kann.

Die Gießform kann eine Mehrzahl der vorstehend beschriebenen variablen Kammern zur Durchführung des Verfahrens aufweisen.

Weiter kann das mit der Gießmaschine in einem Schmelzkanal vor dem Anschnitt befindliche Metall mit einem Druck beaufschlagt und zumindest teilweise in den unteren Kurzschlussring verdrängt werden. Mit einem Gießkolben der Gießmaschine kann so zum Ausgleich von Schwindungen im Bereich des unteren Kurzschlussrings noch flüssiges in dem Schmelzekanal befindliches Metall in den unteren Kurzschlussring gedrückt werden. Mit dem Gießkolben kann folglich das Metall in dem unteren Kurzschlussring so weit verdichtet werden, dass eine Porosität des unteren Kurzschlussrings weiter verringert ist. Dabei kann vorgesehen sein, dass der Druck auf den unteren Kurzschlussring zu dem Zeitpunkt bewirkt wird, wenn auch der Druck an dem oberen Kurzschlussring ausgebildet wird.

Vorteilhaft kann die Beaufschlagung mit dem Druck nach einer Erstarrung des Metalls der Leiter bzw. in den Nuten erfolgen. Im oberen Kurzschlussring und im unteren Kurzschlussring kann das Metall dann noch flüssig bzw. nur teilweise erstarrt sein, so dass zum Ausgleich von Schwindungen Metall nachgefördert werden kann.

Dabei kann ein Druck von 500 kPa bis 1500 kPa, bevorzugt von 750 kPa bis 1250 kPa, besonders bevorzugt von 1000 kPa ausgebildet werden. Dieser Druck kann am oberen Kurzschlussring und/oder am unteren Kurzschlussring ausgebildet werden.

Das Metall kann in den untern Kurzschlussring mit einer Strömungsgeschwindigkeit am Anschnitt von 0,1 m/s bis 1,5 m/s eingebracht werden, bis eine Schmelzefront des Metalls innerhalb der Gießform die Leiter bzw. Nuten erreicht. So kann einer ersten Phase einer Formfüllung zunächst eine Kavität des unteren Kurzschlussrings mit der angegebenen Strömungsgeschwindigkeit vergleichsweise langsam und damit turbulenzarm gefüllt werden. Dadurch kann eine gleichmäßig Füllung des unteren Kurzschlussrings erreicht werden, so dass die dann langsam in der Kavität des unteren Kurzschlussrings aufsteigende Schmelzefront nicht schon vor einer Füllung des unteren Kurzschlussrings in die Leiter bzw. Nuten eindringt bevor der untere Kurzschlussring im Wesentlichen vollständig gefüllt ist.

Nachfolgend einer Füllung des unteren Kurzschlussrings kann dann das Metall in die Leiter mit einer Strömungsgeschwindigkeit am Anschnitt von > 1,5 m/s bis 50 m/s eingebracht werden, zumindest bis das Metall den oberen Kurzschlussring ausfüllt. In einer zweiten Phase einer Formfüllung kann das Metall die Leiter bzw. Nuten mit der vergleichsweise höheren Strömungsgeschwindigkeit am Anschnitt schnell ausfüllen bis eine Kavität des oberen Kurzschlussrings vollständig gefüllt ist. Darüber hinaus muss die am oberen Kurzschlussring befindliche Kammer entsprechend mit Metall ausgefüllt werden. Dadurch, dass in der zweiten Phase der Formfüllung die Strömungsgeschwindigkeit am Anschnitt wesentlich erhöht wird, nämlich dann, wenn der untere Kurzschlussring gefüllt ist, kann der untere Kurzschlussring als Schmelzereservoir zur Füllung genutzt werden. Gleichzeitig kann die Füllung der Nuten gleichmäßig erfolgen, so dass sich eine ebenfalls gleichmäßige Füllung des oberen Kurzschlussrings ergibt. Eine Entlüftung der Kavität ist so leicht möglich und eine Lunker- bzw. Porenbildung wird weniger wahrscheinlich.

Die Schmelzefront des Metalls kann innerhalb der Gießform alle Leiter bzw. Nuten gleichzeitig, das heißt parallel erreichen. Da die Gießform so positioniert ist, dass der Läufer mit seiner Rotationsachse vertikal angeordnet ist, ist dann noch sichergestellt, dass alle Nuten von der in Richtung der Rotationsachse aufsteigenden Schmelzefront im Wesentlichen zum gleichen Zeitpunkt erreicht werden. Im Gegensatz dazu erfolgt bei einem in der Horizontalebene bzw. quer dazu angeordneten Läufer eine ungleichmäßige Füllung der Kavität der Gießform, da hier die Nuten zu unterschiedlichen Zeitpunkten gefüllt werden. Da das flüssige Metall in den Nuten frühzeitig erstarrt, ergibt sich eine entsprechend ungleichmäßige Füllung der Kurzschlussringe, insbesondere des oberen Kurzschlussrings, wodurch eine Porosität wesentlich erhöht wird.

Folglich können auch alle Leiter bzw. Nuten gleichzeitig, das heißt parallel gefüllt werden. Durch die gleichzeitige Füllung der Nuten kann der obere Kurzschlussring ebenfalls gleichmäßig mit einer darin ansteigenden Schmelzefront ausgefüllt werden. Gleichwohl ist es möglich, dass bei einer hohen Strömungsgeschwindigkeit am Anschnitt das geschmolzene Metall im oberen Kurzschlussring turbulent verteilt wird. Dennoch erfolgt dann diese Verteilung des geschmolzenen Metalls in allen Bereichen der betreffenden Kavität gleichmäßig.

Bei dem Einbringen des Metalls kann zumindest eine parallele Strömung in den Leitern bzw. Nuten ausgebildet werden. Die parallele Strömung kann insbesondere dann besonders einfach ausgebildet werden, wenn über den unteren Kurzschlussring bzw. den Anschnitt turbulenzarm flüssiges Metall gefördert werden kann. Die parallele Strömung in den Nuten begünstigt wiederum eine gleichmäßige Verteilung des flüssigen Metalls in einer Kavität des oberen Kurzschlussrings sowie die Ausbildung porenarmer Leiter. Die Strömung in den Nuten kann auch laminar sein.

Eine Kavität der Gießform kann mit einem Vakuum von 30 hPa bis 400 hPa beaufschlagt werden. Prinzipiell kann das Metall auch unter Druck oder auch drucklos in die Gießform eingebracht werden. Die Ausbildung eines Vakuums begünstigt eine Entlüftung der Gießform und hilft, eine Porosität zu vermindern.

Die Gießform kann vor dem Einbringen von Kupfer oder einer Legierung von Kupfer eine Temperatur von 150°C bis 350°C, oder vor dem Einbringen von Aluminium oder einer Legierung von Aluminium eine Temperatur von 100°C bis 300°C, aufweisen. Eine entsprechende Temperierung der Gießform kann über eine Einrichtung der Gießmaschine erfolgen. Wie sich gezeigt hat, wirkt sich die Temperierung der Gießform auf eine verminderte Bildung von Lunkern bzw. Porosität des erhaltenen Erzeugnisses aus.

Eine Kavität der Gießform kann vollständig bzw. alleine über den unteren Anschnitt mit dem Metall gefüllt werden. Die Gießform weist dann keine weiteren Anschnitte auf, über die flüssiges Metall in die Gießform eingebracht werden könnte. Hierdurch wird vermieden, dass sich mehrere Schmelzefronten innerhalb der Gießform ausbilden können, die eine ungleichmäßige Füllung der Gießform zur Folge hätten.

Ein Anteil des Metalls kann mindestens 99,5 Gewichtsprozent, bevorzugt 99,9 Gewichtsprozent, betragen. Bei dem Metall kann es sich dann um ein sogenanntes Reinmetall handeln. Durch die Verwendung des Reinmetalls kann ein besonders hoher elektrischer Leitwert des fertigen Erzeugnisses erzielt werden. Nachteilig ist jedoch, dass bei einem reinen Metall eine plötzliche Erstarrung bei einer definierten Temperatur erfolgt. Hierdurch kann es leicht zu einer Ausbildung von Schwindungen und Lunkern im Bereich der Kurzschlussringe kommen. Das Beaufschlagen der Schmelze mit einem Druck bzw. während des Erstarrens ist dann wesentlich erschwert, da der Druck zum Erstarrungszeitpunkt bereitgestellt werden muss. Bei einer Legierung erfolgt hingegen der Übergang von der flüssigen in die feste Phase innerhalb eines Temperaturbereich, was einen Gießprozess und das Aufbringen eines entsprechenden Drucks wesentlich vereinfacht.

Vorzugsweise kann als Metallkern ein Eisenkern verwendet werden, wobei sich auch andere Metalle wie Molybdän, Nickel, Amalgam, Zink und eisenhaltige Legierungen mit einem oder mehreren dieser Metalle zur Ausbildung des Metallkerns aus beispielsweise einem Blechpaket eignen.

Auch kann eine kolbenlose Gießmaschine, eine Gießmaschine mit einem horizontal bewegbaren Kolben oder eine Gießmaschine mit einem vertikal bewegbaren Kolben verwendet werden. Der Kolben kann relativ zu der Horizontalebene horizontal, schräg oder vertikal angeordnet sein. Eine Gießmaschine kann auch mehrere Kolben aufweisen, die den einen Anschnitt speisen.

Weiter betrifft die Erfindung ein Halbfertigteil eines Läufers, welches mit dem zuvor beschriebenen Verfahren hergestellt ist. An dem Halbfertigteil befindet sich alleine an dem unteren Kurzschlussring ein Anguss.

Die erfindungsgemäße Gießform ist zur Herstellung eines Läufers für eine Elektromaschine, insbesondere Drehelektromotor, Drehstrommotor, Generator oder dergleichen ausgebildet, wobei der Läufer aus einem Metallkern, zumindest einem unteren Kurzschlussring und einem oberen Kurzschlussring und lamellenförmigen Leitern, die die Kurzschlussringe verbinden, ausgebildet ist, wobei die Gießform derart, ausgebildet ist, dass der Metallkern in der Gießform anordbar, ein Metall in die Gießform einbringbar und in der Gießform am Metallkern anbringbar ist, wobei das Metall Kupfer, Aluminium, Silber oder eine Legierung eines dieser Metalle ist, wobei der Läufer mit seiner Rotationsachse vertikal relativ zu einer Horizontalebene in der Gießform ausbildbar ist, wobei die Gießform an dem unteren Kurzschlussring einen Anschnitt aufweist, an dem das Metall in den unteren Kurzschlussring einbringbar ist, wobei der Anschnitt an dem unteren Kurzschlussring eine Querschnittsfläche A_{A} ausbildet, wobei eine Summe der Leiter eine Querschnittsfläche A_{ΣL} ausbildet, wobei der Anschnitt mit einem Verhältnis A_{A} ≥ 0,5^{∗}A_{ΣL}, bevorzugt A_{A} ≥ A_{ΣL}, ausgebildet ist. Zu den Vorteilen der erfindungsgemäßen Gießform wird auf die Vorteilsbeschreibung des erfindungsgemäßen Verfahrens verwiesen.

Der Anschnitt kann mit dem Verhältnis A_{A} ≤ 7^{∗}A_{ΣL}, bevorzugt zwischen A_{A} ≥ 2^{∗}A_{ΣL} bis ≤ 3^{∗}A_{ΣL}, ausgebildet sein.

Die Gießform kann an dem oberen Kurzschlussring zumindest eine variable Kammer aufweisen, in die das Metall ausgehend von dem Anschnitt, dem unteren Kurzschlussring, die Leiter und über den oberen Kurzschlussring einbringbar ist, wobei die Gießform einen an die Kammer angeschlossenen Stößel aufweisen kann, mit dem in der Kammer befindliches Metall mit einem Druck beaufschlagbar und zumindest teilweise in den oberen Kurzschlussring verdrängbar ist.

An dem oberen Kurzschlussring kann auch eine Mehrzahl derartiger Kammern angeordnet sein. Die Kammern können in axialer oder radialer Richtung an den oberen Kurzschlussring anschließen. Weiter kann der Stößel in Art eines Kolbens, Stifts, Rings oder Segments ausgebildet sein. Der Stößel kann dann zur Erzeugung des Drucks in vertikaler oder in horizontaler Richtung in die jeweilige Kammer hineinbewegt werden. Dabei kann vorgesehen sein, dass die Kammer größer als der Stößel ausgebildet ist, derart, dass der Stößel nur ein Stück weit in die Kammer eindringen kann. Beispielsweise kann die Kammer einen größeren Durchmesser aufweisen als der Stößel.

Der Anschnitt kann als ein Ringanschnitt ausgebildet sein, wobei ein zugehöriger Schmelzekanal zumindest abschnittsweise ringförmig ausgebildet sein kann. Der Ringanschnitt kann beispielsweise den unteren Kurzschlussring ringförmig umgeben und so radial am unteren Kurzschlussring ausgebildet sein. Wesentlich ist, dass dann der Ringanschnitt über den Schmelzekanal gleichmäßig mit geschmolzenem Metall versorgt werden kann. Der Schmelzekanal kann daher ebenfalls ringförmig ausgebildet sein und von unten an den Ringanschnitt anschließen. Der Ringanschnitt kann weiter unterhalb des unteren Kurzschlussrings an diesen anschließen, wobei dann der Schmelzekanal ebenfalls unterhalb des Ringanschnitts ausgebildet sein kann. Vorzugsweise kann daher eine Zuführung des flüssigen Metalls von unterhalb des Ringanschnitts erfolgen. Eine Füllung über einen punktuell radial angeordneten Schmelzekanal würde hingegen eine ungleichmäßige Füllung des unteren Kurzschlussrings begünstigen, da dann über den Ringanschnitt der untere Kurzschlussring aufgrund der sich ergebenden Strömungsverhältnisse weniger gleichmäßig mit flüssigem Metall versorgt werden würde.

Alternativ kann der Anschnitt als ein Anschnittsystem mit einer Mehrzahl von Anschnittquerschnitten und zugehörigen Schmelzekanälen ausgebildet sein, wobei die Schmelzekanäle abweichend von einer Flucht der jeweiligen Leiter bzw. Nuten am unteren Kurzschlussring angeordnet sein können. Demnach kann an dem unteren Kurzschlussring eine Mehrzahl von Schmelzekanälen anschließen, die jeweils einen Teilquerschnitt einer Querschnittsfläche A_{A} des Anschnitts bzw. Anschnittsystems ausbilden. Durch die Verwendung einer Mehrzahl von Schmelzekanälen wird es dennoch möglich, eine parallele bzw. gleichmäßige Füllung des unteren Kurzschlussrings bzw. der Kavität der Gießform zu erreichen. Auch hier schließt dann das Anschnittsystem alleine an dem unteren Kurzschlussring an. Um zu vermeiden, dass mit hoher Strömungsgeschwindigkeit in den unteren Kurzschlussring über die Schmelzekanäle einströmendes flüssiges Metall in einzelne Leiter bzw. Nuten eindringt, bevor der untere Kurzschlussring vollständig gefüllt ist, können die Schmelzekanäle abweichend von der Flucht der jeweiligen Leiter so positioniert sein, dass über die Schmelzekanäle einströmendes Metall nicht direkt in die Leiter bzw. Nuten überströmen kann. Beispielsweise können die Schmelzekanäle unterhalb von Nuten immer zwischen zwei Nuten angeordnet sein.

Die Gießform kann relativ zu der Horizontalebene in einer durch eine Rotationsachse des Läufers verlaufenden Vertikalebene teilbar ausgebildet sein. Durch die vertikale Teilung der Gießform kann ein Halbfertigteil des Läufers besonders einfach aus der Gießform entnommen werden.

Die Gießform kann mit zwei oder mehr Kavitäten zur gleichzeitigen Ausbildung von Läufern ausgebildet sein. Ein Läufer wird damit besonders wirtschaftlich herstellbar.

Weitere vorteilhafte Ausführungsformen der Gießform ergeben sich aus den Merkmalsbeschreibungen der auf den Verfahrensanspruch 1 rückbezogenen Unteransprüche.

Nachfolgend wird die Erfindung unter Bezugnahme auf die beigefügten Zeichnungen näher erläutert.

Es zeigen:
- **Fig.** 1: einen Läufer in einer Seitenansicht;
- Fig. 2: der Läufer in einer Schnittansicht entlang einer Linie **II-II** aus Fig. 1;
- Fig. 3: der Läufer in einer Schnittansicht entlang einer Linie III-III aus Fig. 1 und Fig. 2 in einer Gießform in einer Schnittansicht.

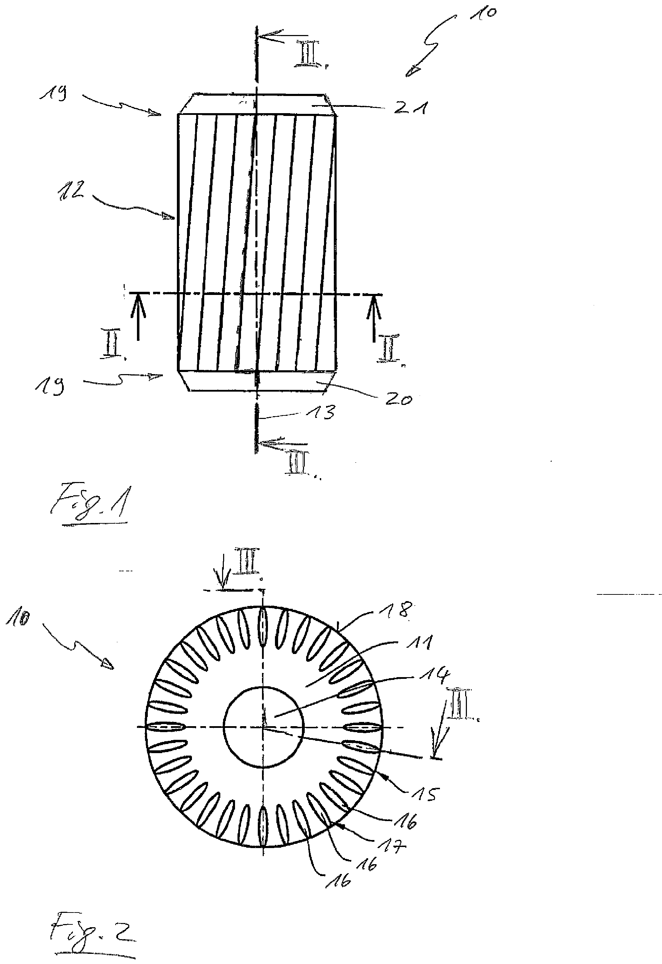

Eine Zusammenschau der Fig. 1 und 2 zeigt einen als Rotor 10 ausgebildeten Läufer für einen Elektromotor, wobei der Rotor 10 mit dem erfindungsgemäßen Verfahren hergestellt wurde. Der Rotor 10 ist aus Eisenblechen 11 gebildet, die in einer Stapelanordnung 12 in Richtung einer Rotationsachse 13 des Rotors 10 dicht aneinander anliegend aufgereiht sind. In den Eisenblechen 11 ist jeweils eine Durchgangsöffnung 14 zur Aufnahme einer hier nicht dargestellten Antriebswelle sowie entlang eines Umfangs 15 der Eisenbleche 11 äquidistant angeordnete Nuten 16 ausgebildet. Die Nuten 16 bilden innerhalb der Stapelanordnung 12 hier nicht mehr ersichtliche Kanäle aus, die mittels des erfindungsgemäßen Verfahrens mit geschmolzenem Kupfer, Aluminium oder Silber oder einer Legierung eines dieser Metalle ausgegossen werden. Nach einem Erstarren des Metalls sind sämtliche Nuten 16 mit Metall gefüllt, so dass jeweils ein elektrischer Leiter 17 ausgebildet ist. Auf einer Umfangsoberfläche 18 des Rotors 10 ist ein Verlauf der Leiter 17 durch das hier sichtbare Metall erkennbar. An jeweils Enden 19 des Rotors 10 ist ein kreisringförmiger unterer bzw. erster Kurzschlussring 20 und ein kreisringförmiger oberer bzw. zweiter Kurzschlussring 21 an die Stapelanordnung 12 angegossen.

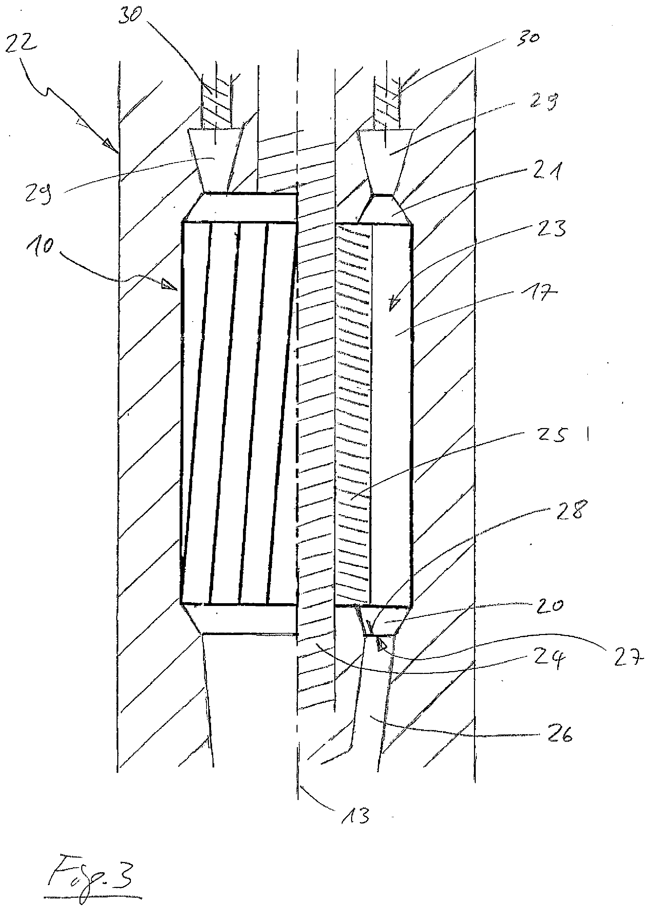

Die Fig. 3 zeigt den Rotor 10 bzw. die Stapelanordnung 12 in einer Gießform 22 in jeweils einer Schnittansicht. Eine Teilungsebene der Gießform 22 ist hier nicht näher dargestellt, verläuft jedoch entlang der Rotationsachse 13. In eine Kavität 23 der Gießform 22 ist ein zylinderförmiger Kern 24 mit der Stapelanordnung 12 bzw. einem Metallkern 25 eingesetzt. Der Kern 24 verschließt die koaxiale Durchgangsöffnung 14 in Richtung der Rotationsachse 13 des Rotors 10. In der Gießform 22 ist ein Schmelzekanal 26 mit abschnittsweise kreisringförmiger Gestalt ausgebildet, über den dem unteren Kurzschlussring 20 geschmolzenes Metall zugeführt werden kann. In einem Übergang von dem Schmelzekanal 26 zu dem unteren Kurzschlussring 20 ist ein Anschnitt 27 mit einer Querschnittsfläche 28 ausgebildet. Der Rotor 10 ist relativ zu einer hier nicht dargestellten Horizontalebene mit seiner Rotationsachse 13 vertikal in der Gießform 22 angeordnet, so dass der Schmelzekanal 26 unterhalb des unteren Kurzschlussrings 20 und der obere Kurzschlussring 21 oberhalb des unteren Kurzschlussrings 20 in der Gießform 22 angeordnet ist. Der untere Kurzschlussring 20 ist über die Nuten 16 bzw. die Leiter 17 mit dem oberen Kurzschlussring 21 verbunden. Bei einem Füllen der Gießform 22 bzw. der Kavität 23 strömt das geschmolzene Metall zunächst über den Schmelzekanal 26 und den Anschnitt 27 in den unteren Kurzschlussring 20 von unten kommend ein und steigt innerhalb der Kavität 23 bzw. in den Nuten 16 gleichmäßig und parallel in Richtung des oberen Kurzschlussrings 21 auf. Eventuell oberhalb des geschmolzenen Metalls befindliche Gase werden über hier nicht dargestellte Kanäle im Bereich des oberen Kurzschlussrings 21 aus der Kavität 23 ausgeleitet.

Weiter sind an dem obere Kurzschlussring 21 eine Mehrzahl variable Kammern 29 innerhalb der Gießform 22 ausgebildet, wobei an jede Kammer 29 ein Stößel 30 angeschlossen ist, der in die Kammer 29 hinein und heraus bewegt werden kann. Bei einem Füllen der Kavität 23 mit flüssigem Metall werden die Kammern 29 ebenfalls zumindest teilweise mit flüssigem Metall befüllt. Nach einer Erstarrung des Metalls innerhalb der Nuten 16 beginnt eine Erstarrung des oberen Kurzschlussrings 21 und des unteren Kurzschlussrings 20, wobei zum Ausgleich einer Schwindung bei der Erstarrung das in der jeweiligen Kammer 29 befindliche Metall durch eine Bewegung des Stößels 31 in die Kammer 29 hinein mit einem Druck beaufschlagt wird, derart, dass zumindest teilweise das in der Kammer 29 befindliche noch flüssige Metall in den oberen Kurzschlussring 21 verdrängt wird. Gleichzeitig wird mit der Gießmaschine bzw. einem Kolben der Gießmaschine in dem Schmelzekanal 26 ein Druck aufgebaut, durch den vor dem Anschnitt 27 im Schmelzekanal 26 befindliches noch flüssiges Metall zumindest teilweise in den unteren Kurzschlussring 20 verdrängt wird.

Weiter wird während des Gießens des Rotors 10 das Metall in den unteren Kurzschlussring 20 über den Schmelzekanal 26 mit einer Strömungsgeschwindigkeit am Anschnitt 27 von 0,1 m/s bis 1,5 m/s eingebracht, bis eine Schmelzefront des Metalls innerhalb der Kavität 23 der Gießform 22 die Nuten 16 erreicht bzw. der untere Kurzschlussring 20 vollständig ausgefüllt ist. Nach der Füllung des unteren Kurzschlussrings 20 wird das Metall in die Nuten 16 mit einer Strömungsgeschwindigkeit am Anschnitt 27 von > 1,5 m/s bis 50 m/s eingebracht bzw. die Strömungsgeschwindigkeit erhöht. Diese Strömungsgeschwindigkeit wird bis zur vollständigen Füllung der Kavität 23 bzw. der Nuten 16 und dem oberen Kurzschlussring 21 beibehalten.

Demnach wird beim Gießen des Rotors 10 in einer ersten Phase der untere Kurzschlussring 20 vergleichsweise langsam gefüllt, wobei in einer zweiten Phase die Nuten 16, der obere Kurzschlussring 21 und zumindest teilweise die Kammer 29 schnell ausgefüllt werden, und wobei in einer dritten Phase nach der Erstarrung des Metalls in den Nuten 16 der untere Kurzschlussring 20 und der obere Kurzschlussring 21 bzw. das darin befindliche Metall mit einem Druck beaufschlagt wird. Insgesamt ist es so möglich, einen Rotor 10 herzustellen, der eine weiter reduzierte Porosität aufweist.

## Patentansprüche

1. Verfahren zur Herstellung eines Läufers (10) für eine Elektromaschine, insbesondere Drehstrommotor, wobei der Läufer aus einem Metallkern (25), zumindest einem unteren Kurzschlussring (20) und einem oberen Kurzschlussring (21), und lamellenförmigen Leitern (17), die die Kurzschlussringe verbinden, ausgebildet wird, wobei das Verfahren mit einer Gießmaschine und einer Gießform (22) durchgeführt wird, wobei der Metallkern in der Gießform angeordnet und ein Metall in der Gießform am Metallkern angebracht wird, wobei das Metall geschmolzen und in die Gießform eingebracht wird, wobei das Metall Kupfer, Aluminium, Silber oder eine Legierung eines dieser Metalle ist, wobei der Läufer mit seiner Rotationsachse (13) vertikal relativ zu einer Horizontalebene in der Gießform ausgebildet wird, wobei das Metall an einem Anschnitt (27) der Gießform an dem unteren Kurzschlussring in die Gießform eingebracht wird,
**dadurch gekennzeichnet,**
**dass** das Metall ausgehend von dem Anschnitt den unteren Kurzschlussring, die Leiter und den oberen Kurzschlussring ausfüllt, wobei der Anschnitt eine Querschnittsfläche A_{A} ausbildet, wobei eine Summe der Leiter eine Querschnittsfläche A_{ΣL} ausbildet, wobei der Anschnitt mit einem Verhältnis A_{A} ≥ 0,5^{∗}A_{ΣL}, bevorzugt A_{A} ≥ A_{ΣL}, verwendet wird.

2. Verfahren nach Anspruch 1,
**dadurch gekennzeichnet,**
**dass** der Anschnitt (27) mit dem Verhältnis A_{A} ≤ 7^{∗}A_{ΣL}, bevorzugt zwischen A_{A} ≥ 2^{∗}A_{ΣL} bis ≤ 3^{∗}A_{ΣL}, verwendet wird.

3. Verfahren nach Anspruch 1 oder 2,
**dadurch gekennzeichnet,**
**dass** das Metall ausgehend von dem Anschnitt (27) den unteren Kurzschlussring (20), die Leiter (17) und den oberen Kurzschlussring (21) ausfüllt, wobei das Metall über den oberen Kurzschlussring in zumindest eine variable Kammer (29) der Gießform an dem oberen Kurzschlussring eingebracht wird, wobei mittels eines an die Kammer angeschlossenen Stößels (30) der Gießform das in der Kammer befindliche Metall mit einem Druck beaufschlagt und zumindest teilweise in den oberen Kurzschlussring verdrängt wird.

4. Verfahren nach Anspruch 3,
**dadurch gekennzeichnet,**
**dass** mit der Gießmaschine das in einem Schmelzekanal (26) vor dem Anschnitt befindliche Metall mit einem Druck beaufschlagt und zumindest teilweise in den unteren Kurzschlussring (20) verdrängt wird.

5. Verfahren nach einem der vorangehenden Ansprüche,
**dadurch gekennzeichnet,**
**dass** das Metall in den unteren Kurzschlussring (20) mit einer Strömungsgeschwindigkeit am Anschnitt (27) von 0,1 m/s bis 1,5 m/s eingebracht wird, bis eine Schmelzefront des Metalls innerhalb der Gießform (22) die Leiter (17) erreicht.

6. Verfahren nach Anspruch 5,
**dadurch gekennzeichnet,**
**dass** nachfolgend einer Füllung des unteren Kurzschlussrings (20) das Metall in die Leiter (17) mit einer Strömungsgeschwindigkeit am Anschnitt (27) von > 1,5 m/s bis 50 m/s eingebracht wird, zumindest bis das Metall den oberen Kurzschlussring (21) ausfüllt.

7. Verfahren nach einem der vorangehenden Ansprüche,
**dadurch gekennzeichnet,**
**dass** eine Schmelzefront des Metalls innerhalb der Gießform (22) alle Leiter (17) gleichzeitig erreicht.

8. Verfahren nach einem der vorangehenden Ansprüche,
**dadurch gekennzeichnet,**
**dass** alle Leiter (17) gleichzeitig gefüllt werden.

9. Verfahren nach einem der vorangehenden Ansprüche,
**dadurch gekennzeichnet,**
**dass** bei dem Einbringen des Metalls zumindest teilweise eine parallele Strömung in den Leitern (17) ausgebildet wird.

10. Verfahren nach einem der vorangehenden Ansprüche,
**dadurch gekennzeichnet,**
**dass** eine Kavität (23) der Gießform (22) mit einem Vakuum von 30 hPa bis 400 hPa beaufschlagt wird.

11. Verfahren nach einem der vorangehenden Ansprüche,
**dadurch gekennzeichnet,**
**dass** die Gießform (22) vor dem Einbringen von Kupfer oder einer Legierung von Kupfer eine Temperatur von 150°C bis 350°C, oder vor dem Einbringen von Aluminium oder einer Legierung von Aluminium eine Temperatur von 100°C bis 300°C, aufweist.

12. Verfahren nach einem der vorangehenden Ansprüche,
**dadurch gekennzeichnet,**
**dass** eine Kavität (23) der Gießform (22) vollständig über den Anschnitt (27) am unteren Kurzschlussring (20) mit dem Metall gefüllt wird.

13. Gießform (22) zur Herstellung eines Läufers (10) für eine Elektromaschine, insbesondere Drehstrommotor, wobei der Läufer aus einem Metallkern (25), zumindest einem unteren Kurzschlussring (20) und einem oberen Kurzschlussring (21), und lamellenförmigen Leitern (17), die die Kurzschlussringe verbinden, ausgebildet ist, wobei die Gießform derart ausgebildet ist, dass der Metallkern in der Gießform anordbar, ein Metall in die Gießform einbringbar und in der Gießform am Metallkern anbringbar ist, wobei das Metall Kupfer, Aluminium, Silber oder eine Legierung eines dieser Metalle ist, wobei der Läufer mit seiner Rotationsachse (13) vertikal relativ zu einer Horizontalebene in der Gießform ausbildbar ist, wobei die Gießform an dem unteren Kurzschlussring einen Anschnitt (27) aufweist, an dem das Metall in den unteren Kurzschlussring einbringbar ist,
**dadurch gekennzeichnet,**
**dass** der Anschnitt an dem unteren Kurzschlussring eine Querschnittsfläche A_{A} ausbildet, wobei eine Summe der Leiter eine Querschnittsfläche A_{ΣL} ausbildet, wobei der Anschnitt mit einem Verhältnis A_{A} ≥ 0,5^{∗}A_{ΣL}, bevorzugt A_{A} ≥ A_{ΣL}, ausgebildet ist.

14. Gießform nach Anspruch 13,
**dadurch gekennzeichnet,**
**dass** der Anschnitt (27) mit dem Verhältnis A_{A} ≤ 7^{∗}A_{ΣL}, bevorzugt zwischen A_{A} ≥ 2^{∗}A_{ΣL} bis ≤ 3^{∗}A_{ΣL}, ausgebildet ist.

15. Gießform nach Anspruch 13 oder 14,
**dadurch gekennzeichnet,**
**dass** die Gießform (22) an dem oberen Kurzschlussring (21) zumindest eine variable Kammer (29) aufweist, in die das Metall ausgehend von dem Anschnitt (27), den unteren Kurzschlussring (20), die Leiter (17) und über den oberen Kurzschlussring einbringbar ist, wobei die Gießform einen an die Kammer angeschlossenen Stößel (30) aufweist, mit dem in der Kammer befindliches Metall mit einem Druck beaufschlagbar und zumindest teilweise in den oberen Kurzschlussring verdrängbar ist.

16. Gießform nach einem der Ansprüche 13 bis 15,
**dadurch gekennzeichnet,**
**dass** der Anschnitt (27) als ein Ringanschnitt ausgebildet ist, wobei ein zugehöriger Schmelzekanal (26) zumindest abschnittsweise ringförmig ausgebildet ist.

17. Gießform nach einem der Ansprüche 13 bis 15,
**dadurch gekennzeichnet,**
**dass** der Anschnitt (27) als ein Anschnittsystem mit einer Mehrzahl von Anschnittquerschnitten und zugehörigen Schmelzekanälen ausgebildet ist, wobei die Schmelzekanäle abweichend von einer Flucht der jeweiligen Leiter (17) am unteren Kurzschlussring (20) angeordnet sind.

18. Gießform nach einem der Ansprüche 13 bis 17,
**dadurch gekennzeichnet,**
**dass** die Gießform (22) in einer durch eine Rotationsachse (13) des Läufers (10) verlaufenden Vertikalebene teilbar ausgebildet ist.
